# EUROPEAN PATENT SPECIFICATION

(11) **EP 2 974 235 B1**
(45) Date of publication and mention of the grant of the patent: **31.01.2018**
(21) Application number: 14771642.7
(22) Date of filing: 07.03.2014
(51) Int. Cl.: H04L 29/08, G01P 15/08

(54) **BANDWIDTH AND TIME DELAY MATCHING FOR INERTIAL SENSORS**
BANDBREITEN- UND ZEITVERZÖGERUNGSANPASSUNG FÜR TRÄGHEITSSENSOREN
MISE EN CORRESPONDANCE D'UNE BANDE PASSANTE ET D'UN RETARD POUR CAPTEURS INERTIELS

(30) Priority: 11.03.2013 US 201313792944
(43) Date of publication of application: 20.01.2016
(73) Proprietor: Qualcomm Incorporated, San Diego, CA 92121 (US)
(72) Inventor: CZOMPO, Joseph, San Diego, California 92121-1714 (US)
(74) Representative: Tomkins & Co
(86) International application number: PCT/US2014/021628
(87) International publication number: WO 2014/197019

(56) References cited:
- WO-A1-2009/093891
- US-A1- 2012 290 266

## Description

### BACKGROUND OF THE INVENTION

### 1. Field of the Invention

The disclosure is directed to bandwidth and time delay matching for inertial sensors.

### 2. Description of the Related Art

Mobile devices, such as cell phones, personal digital assistants (PDAs), tablet computers, etc., frequently contain inertial sensors, such as accelerometers and gyroscopes. The mobile device can determine its acceleration and/or rotation, for example, by sampling the data output by the accelerometer and/or gyroscope, respectively, at a given sampling rate. Inertial sensors are typically implemented as low-cost microelectromechanical systems (MEMS) inertial sensors.

These MEMS inertial sensors may have lower bandwidth (i.e., the difference between the upper and lower frequencies) than the Nyquist frequency (i.e., half the sampling rate/frequency) that corresponds to the sampling rate. Further, the bandwidth of the accelerometer may differ from the bandwidth of the gyroscope even if they are used in the same mobile device. More generally, different frequency filters may be applied to accelerometers than to gyroscopes. This has at least two effects: (1) the frequency content and (2) the signal group delay are different in the accelerometer and the gyroscope. When these sensors are used together, as in inertial navigation, for example, this frequency and time delay mismatch can negatively affect performance. Such a mismatch causes a measurable performance degradation in inertial systems.

WO 2009/093891 discloses a mobile monitoring system comprising at least one mobile sensor system arranged for detecting one or more parameter value(s) and wirelessly transmitting sensor signal(s) associated with said parameter value(s), a mobile base unit arranged for receiving the sensor signal(s) from the at least one mobile sensor system and for wirelessly transmitting a mobile base unit signal associated with the received sensor signal(s).

US 2012/0290266 discloses that a first data stream from a first sensor may comprise a tuple (s1, t1) representing a sample s1 with a local timestamp t1 based on a local clock on the first sensor, while a second data stream from a second sensor may comprise a tuple (s2, t2) representing a sample s2 with a local timestamp t2 based on a local clock on the second sensor. Methods for synchronising the two sensors are disclosed.

### SUMMARY

The disclosure is directed to matching a time delay and a bandwidth of a plurality of sensors. A method for matching a time delay and a bandwidth of a plurality of sensors includes receiving first sensor data having a first timestamp from a first sensor having a first bandwidth, receiving second sensor data having a second timestamp from a second sensor having a second bandwidth, and synchronizing the first sensor data and the second sensor data by performing one or more of compensating for a first time delay of the first sensor data, compensating for a second time delay of the second sensor data, compensating for a relative time delay between the first sensor data and the second sensor data, or matching the first bandwidth and the second bandwidth to a common bandwidth.

An apparatus for matching a time delay and a bandwidth of a plurality of sensors includes logic configured to receive first sensor data having a first timestamp from a first sensor having a first bandwidth, logic configured to receive second sensor data having a second timestamp from a second sensor having a second bandwidth, and logic configured to synchronize the first sensor data and the second sensor data comprising one or more of logic configured to compensate for a first time delay of the first sensor data, logic configured to compensate for a second time delay of the second sensor data, logic configured to compensate for a relative time delay between the first sensor data and the second sensor data, or logic configured to match the first bandwidth and the second bandwidth to a common bandwidth.

An apparatus for matching a time delay and a bandwidth of a plurality of sensors includes means for receiving first sensor data having a first timestamp from a first sensor having a first bandwidth, means for receiving second sensor data having a second timestamp from a second sensor having a second bandwidth, and means for synchronizing the first sensor data and the second sensor data comprising one or more means for compensating for a first time delay of the first sensor data, means for compensating for a second time delay of the second sensor data, means for compensating for a relative time delay between the first sensor data and the second sensor data, or means for matching the first bandwidth and the second bandwidth to a common bandwidth.

A non-transitory computer-readable medium for matching a time delay and a bandwidth of a plurality of sensors includes at least one instruction to receive first sensor data having a first timestamp from a first sensor having a first bandwidth, at least one instruction to receive second sensor data having a second timestamp from a second sensor having a second bandwidth, and at least one instruction to synchronize the first sensor data and the second sensor data comprising one or more of at least one instruction to compensate for a first time delay of the first sensor data, at least one instruction to compensate for a second time delay of the second sensor data, at least one instruction to compensate for a relative time delay between the first sensor data and the second sensor data, or at least one instruction to match the first bandwidth and the second bandwidth to a common bandwidth.

### BRIEF DESCRIPTION OF THE DRAWINGS

A more complete appreciation of embodiments of the invention and many of the attendant advantages thereof will be readily obtained as the same becomes better understood by reference to the following detailed description when considered in connection with the accompanying drawings which are presented solely for illustration and not limitation of the invention, and in which:
FIG. 1 illustrates a high-level system architecture of a wireless communications system in accordance with an embodiment of the invention.
FIG. 2 illustrates examples of user equipments (UEs) in accordance with embodiments of the invention.
FIG. 3 illustrates a communication device that includes logic configured to perform functionality in accordance with an embodiment of the invention.
FIG. 4 illustrates various sources of time delay inside an exemplary sensor.
FIG. 5 is an exemplary illustration of the error caused by a time offset when two signals are multiplied.
FIG. 6 illustrates an exemplary embodiment to compensate for different bandwidths and time delays between two sensors.
FIG. 7 illustrates an exemplary flow of an embodiment.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the invention" does not require that all embodiments of the invention include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

A client device, referred to herein as a user equipment (UE), may be mobile or stationary, and may communicate with a radio access network (RAN). As used herein, the term "UE" may be referred to interchangeably as an "access terminal" or "AT," a "wireless device," a "subscriber device," a "subscriber terminal," a "subscriber station," a "user terminal" or UT, a "mobile terminal," a "mobile station" and variations thereof. Generally, UEs can communicate with a core network via the RAN, and through the core network the UEs can be connected with external networks such as the Internet. Of course, other mechanisms of connecting to the core network and/or the Internet are also possible for the UEs, such as over wired access networks, WiFi networks (e.g., based on IEEE 802.11, etc.) and so on. UEs can be embodied by any of a number of types of devices including but not limited to PC cards, compact flash devices, external or internal modems, wireless or wireline phones, and so on. A communication link through which UEs can send signals to the RAN is called an uplink channel (e.g., a reverse traffic channel, a reverse control channel, an access channel, etc.). A communication link through which the RAN can send signals to UEs is called a downlink or forward link channel (e.g., a paging channel, a control channel, a broadcast channel, a forward traffic channel, etc.). As used herein the term traffic channel (TCH) can refer to either an uplink / reverse or downlink / forward traffic channel.

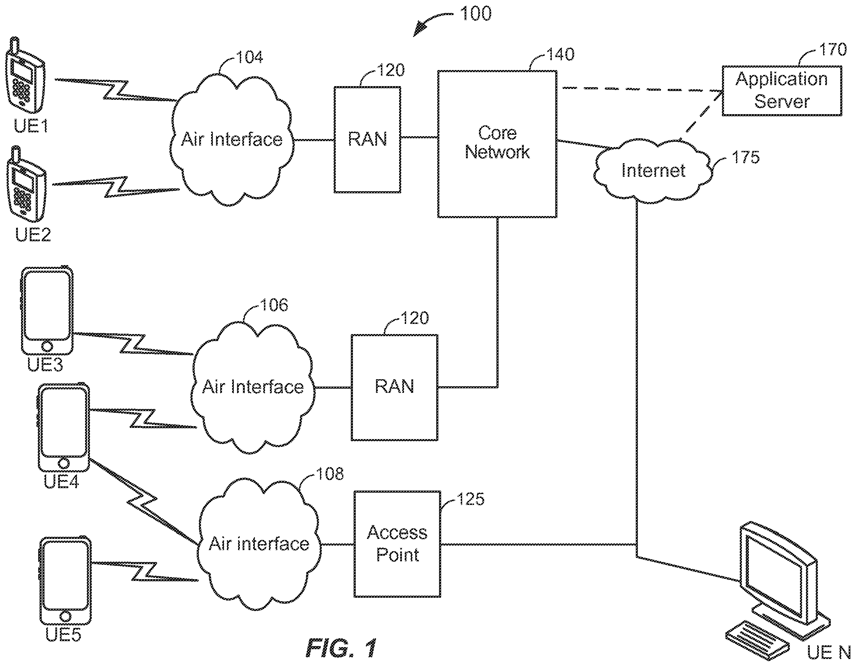

FIG. 1 illustrates a high-level system architecture of a wireless communications system 100 in accordance with an embodiment of the invention. The wireless communications system 100 contains UEs 1...N. The UEs 1...N can include cellular telephones, personal digital assistants (PDAs), pagers, laptop computers, desktop computers, and so on. For example, in FIG. 1, UEs 1...2 are illustrated as cellular calling phones, UEs 3...5 are illustrated as cellular touchscreen phones or smart phones, and UE N is illustrated as a desktop computer or PC (personal computer).

Referring to FIG. 1, UEs 1...N are configured to communicate with an access network (e.g., the RAN 120, an access point 125, etc.) over a physical communications interface or layer, shown in FIG. 1 as air interfaces 104, 106, 108 and/or a direct wired connection. The air interfaces 104 and 106 can comply with a given cellular communications protocol (e.g., CDMA (Code Division Multiple Access), EV-DO (Evolution-Data Optimized), eHRPD (Evolved High Rate Packet Data), GSM (Global System for Mobile Communications), EDGE (Enhanced Data Rates for GSM Evolution), W-CDMA (Wideband CDMA), LTE (Long-Term Evolution), etc.), while the air interface 108 can comply with a wireless IP protocol (e.g., IEEE 802.11). The RAN 120 includes a plurality of access points that serve UEs over air interfaces, such as the air interfaces 104 and 106. The access points in the RAN 120 can be referred to as access nodes or ANs, access points or APs, base stations or BSs, Node Bs, eNode Bs, and so on. These access points can be terrestrial access points (or ground stations), or satellite access points. The RAN 120 is configured to connect to a core network 140 that can perform a variety of functions, including bridging circuit switched (CS) calls between UEs served by the RAN 120 and other UEs served by the RAN 120 or a different RAN altogether, and can also mediate an exchange of packet-switched (PS) data with external networks such as Internet 175. The Internet 175 includes a number of routing agents and processing agents (not shown in FIG. 1 for the sake of convenience). In FIG. 1, UE N is shown as connecting to the Internet 175 directly (i.e., separate from the core network 140, such as over an Ethernet connection of WiFi or 802.11-based network). The Internet 175 can thereby function to bridge packet-switched data communications between UE N and UEs 1...N via the core network 140. Also shown in FIG.1 is the access point 125 that is separate from the RAN 120. The access point 125 may be connected to the Internet 175 independent of the core network 140 (e.g., via an optical communication system such as FiOS, a cable modem, etc.). The air interface 108 may serve UE 4 or UE 5 over a local wireless connection, such as IEEE 802.11 in an example. UE N is shown as a desktop computer with a wired connection to the Internet 175, such as a direct connection to a modem or router, which can correspond to the access point 125 itself in an example (e.g., for a WiFi router with both wired and wireless connectivity).

Referring to FIG. 1, an application server 170 is shown as connected to the Internet 175, the core network 140, or both. The application server 170 can be implemented as a plurality of structurally separate servers, or alternately may correspond to a single server. As will be described below in more detail, the application server 170 is configured to support one or more communication services (e.g., Voice-over-Internet Protocol (VoIP) sessions, Push-to-Talk (PTT) sessions, group communication sessions, social networking services, etc.) for UEs that can connect to the application server 170 via the core network 140 and/or the Internet 175.

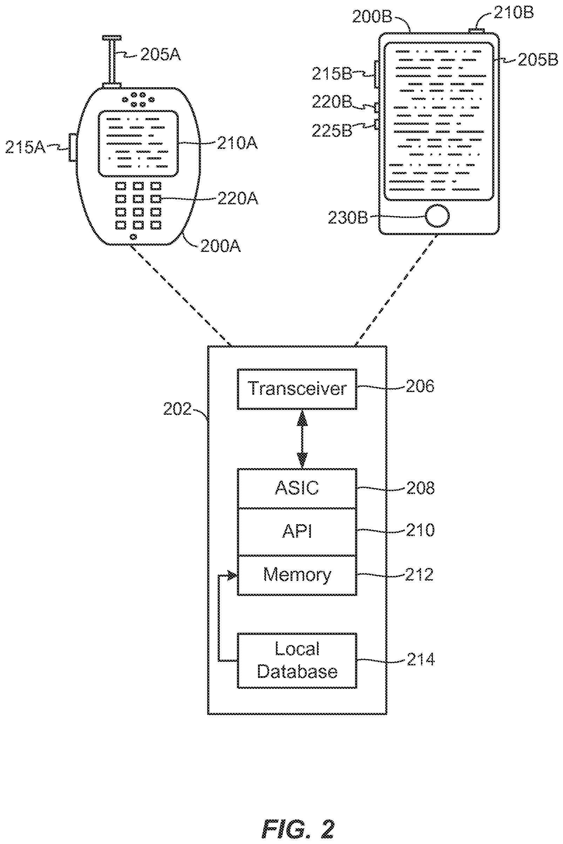

FIG. 2 illustrates examples of UEs in accordance with embodiments of the invention. Referring to FIG. 2, UE 200A is illustrated as a calling telephone and UE 200B is illustrated as a touchscreen device (e.g., a smart phone, a tablet computer, etc.). As shown in FIG. 2, an external casing of UE 200A is configured with an antenna 205A, display 210A, at least one button 215A (e.g., a PTT button, a power button, a volume control button, etc.) and a keypad 220A among other components, as is known in the art. Also, an external casing of UE 200B is configured with a touchscreen display 205B, peripheral buttons 210B, 215B, 220B and 225B (e.g., a power control button, a volume or vibrate control button, an airplane mode toggle button, etc.), at least one front-panel button 230B (e.g., a Home button, etc.), among other components, as is known in the art. While not shown explicitly as part of UE 200B, the UE 200B can include one or more external antennas and/or one or more integrated antennas that are built into the external casing of UE 200B, including but not limited to WiFi antennas, cellular antennas, satellite position system (SPS) antennas (e.g., global positioning system (GPS) antennas), and so on.

While internal components of UEs such as the UEs 200A and 200B can be embodied with different hardware configurations, a basic high-level UE configuration for internal hardware components is shown as platform 202 in FIG. 2. The platform 202 can receive and execute software applications, data and/or commands transmitted from the RAN 120 that may ultimately come from the core network 140, the Internet 175 and/or other remote servers and networks (e.g., application server 170, web URLs, etc.). The platform 202 can also independently execute locally stored applications without RAN interaction. The platform 202 can include a transceiver 206 operably coupled to an application specific integrated circuit (ASIC) 208, or other processor, microprocessor, logic circuit, or other data processing device. The ASIC 208 or other processor executes the application programming interface (API) 210 layer that interfaces with any resident programs in the memory 212 of the wireless device. The memory 212 can be comprised of read-only memory (ROM), random-access memory (RAM), electrically erasable programmable ROM (EEPROM), flash cards, or any memory common to computer platforms. The platform 202 also can include a local database 214 that can store applications not actively used in memory 212, as well as other data. The local database 214 is typically a flash memory cell, but can be any secondary storage device as known in the art, such as magnetic media, EEPROM, optical media, tape, soft or hard disk, or the like.

Accordingly, an embodiment of the invention can include a UE (e.g., UE 200A, 200B, etc.) including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 208, memory 212, API 210 and local database 214 may all be used cooperatively to load, store and execute the various functions disclosed herein and thus the logic to perform these functions may be distributed over various elements. Alternatively, the functionality could be incorporated into one discrete component. Therefore, the features of the UEs 200A and 200B in FIG. 2 are to be considered merely illustrative and the invention is not limited to the illustrated features or arrangement.

The wireless communication between the UEs 200A and/or 200B and the RAN 120 can be based on different technologies, such as CDMA, W-CDMA, time division multiple access (TDMA), frequency division multiple access (FDMA), Orthogonal Frequency Division Multiplexing (OFDM), GSM, or other protocols that may be used in a wireless communications network or a data communications network. As discussed in the foregoing and known in the art, voice transmission and/or data can be transmitted to the UEs from the RAN using a variety of networks and configurations. Accordingly, the illustrations provided herein are not intended to limit the embodiments of the invention and are merely to aid in the description of aspects of embodiments of the invention.

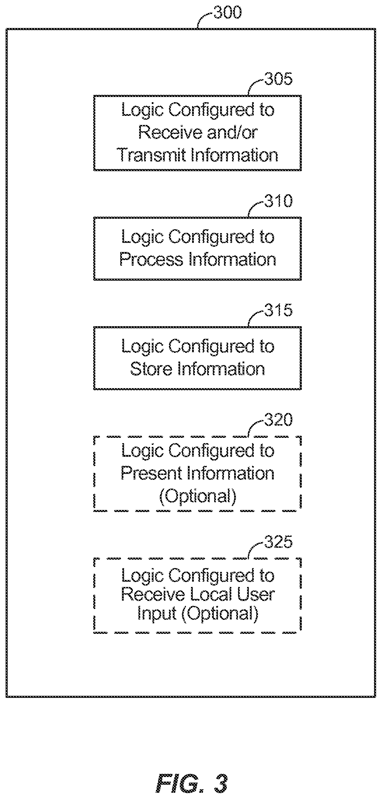

FIG. 3 illustrates a communication device 300 that includes logic configured to perform functionality. The communication device 300 can correspond to any of the above-noted communication devices, including but not limited to UEs 200A or 200B, any component of the RAN 120, any component of the core network 140, any components coupled with the core network 140 and/or the Internet 175 (e.g., the application server 170), and so on. Thus, communication device 300 can correspond to any electronic device that is configured to communicate with (or facilitate communication with) one or more other entities over the wireless communications system 100 of FIG. 1.

Referring to FIG. 3, the communication device 300 includes logic configured to receive and/or transmit information 305. In an example, if the communication device 300 corresponds to a wireless communications device (e.g., UE 200A or 200B), the logic configured to receive and/or transmit information 305 can include a wireless communications interface (e.g., Bluetooth, WiFi, 2G, CDMA, W-CDMA, 3G, 4G, LTE, etc.) such as a wireless transceiver and associated hardware (e.g., an RF antenna, a MODEM, a modulator and/or demodulator, etc.). In another example, the logic configured to receive and/or transmit information 305 can correspond to a wired communications interface (e.g., a serial connection, a USB or Firewire connection, an Ethernet connection through which the Internet 175 can be accessed, etc.). Thus, if the communication device 300 corresponds to some type of network-based server (e.g., the application 170), the logic configured to receive and/or transmit information 305 can correspond to an Ethernet card, in an example, that connects the network-based server to other communication entities via an Ethernet protocol. In a further example, the logic configured to receive and/or transmit information 305 can include sensory or measurement hardware by which the communication device 300 can monitor its local environment (e.g., an accelerometer, a temperature sensor, a light sensor, an antenna for monitoring local RF signals, etc.). For example, the logic configured to receive and/or transmit information 305 can include logic configured to receive first sensor data having a first timestamp from a first sensor having a first bandwidth and logic configured to receive second sensor data having a second timestamp from a second sensor having a second bandwidth. The logic configured to receive and/or transmit information 305 can also include software that, when executed, permits the associated hardware of the logic configured to receive and/or transmit information 305 to perform its reception and/or transmission function(s). However, the logic configured to receive and/or transmit information 305 does not correspond to software alone, and the logic configured to receive and/or transmit information 305 relies at least in part upon hardware to achieve its functionality.

Referring to FIG. 3, the communication device 300 further includes logic configured to process information 310. In an example, the logic configured to process information 310 can include at least a processor. Example implementations of the type of processing that can be performed by the logic configured to process information 310 includes but is not limited to performing determinations, establishing connections, making selections between different information options, performing evaluations related to data, interacting with sensors coupled to the communication device 300 to perform measurement operations, converting information from one format to another (e.g., between different protocols such as .wmv to .avi, etc.), and so on. For example, the logic configured to process information 310 can include logic configured to compensate for a first time delay of a first sensor and a second time delay of a second sensor and logic configured to match a frequency of the first bandwidth to a frequency of the second bandwidth. The processor included in the logic configured to process information 310 can correspond to a general purpose processor, a digital signal processor (DSP), an ASIC, a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The logic configured to process information 310 can also include software that, when executed, permits the associated hardware of the logic configured to process information 310 to perform its processing function(s). However, the logic configured to process information 310 does not correspond to software alone, and the logic configured to process information 310 relies at least in part upon hardware to achieve its functionality.

Referring to FIG. 3, the communication device 300 further includes logic configured to store information 315. In an example, the logic configured to store information 315 can include at least a non-transitory memory and associated hardware (e.g., a memory controller, etc.). For example, the non-transitory memory included in the logic configured to store information 315 can correspond to RAM, flash memory, ROM, erasable programmable ROM (EPROM), EEPROM, registers, hard disk, a removable disk, a CD-ROM, or any other form of storage medium known in the art. The logic configured to store information 315 can also include software that, when executed, permits the associated hardware of the logic configured to store information 315 to perform its storage function(s). However, the logic configured to store information 315 does not correspond to software alone, and the logic configured to store information 315 relies at least in part upon hardware to achieve its functionality.

Referring to FIG. 3, the communication device 300 further optionally includes logic configured to present information 320. In an example, the logic configured to present information 320 can include at least an output device and associated hardware. For example, the output device can include a video output device (e.g., a display screen, a port that can carry video information such as USB (Universal Serial Bus), HDMI (High-Definition Multimedia Interface), etc.), an audio output device (e.g., speakers, a port that can carry audio information such as a microphone jack, USB, HDMI, etc.), a vibration device and/or any other device by which information can be formatted for output or actually outputted by a user or operator of the communication device 300. For example, if the communication device 300 corresponds to UE 200A or UE 200B as shown in FIG. 2, the logic configured to present information 320 can include the display 210A of UE 200A or the touchscreen display 205B of UE 200B. In a further example, the logic configured to present information 320 can be omitted for certain communication devices, such as network communication devices that do not have a local user (e.g., network switches or routers, remote servers, etc.). The logic configured to present information 320 can also include software that, when executed, permits the associated hardware of the logic configured to present information 320 to perform its presentation function(s). However, the logic configured to present information 320 does not correspond to software alone, and the logic configured to present information 320 relies at least in part upon hardware to achieve its functionality.

Referring to FIG. 3, the communication device 300 further optionally includes logic configured to receive local user input 325. In an example, the logic configured to receive local user input 325 can include at least a user input device and associated hardware. For example, the user input device can include buttons, a touchscreen display, a keyboard, a camera, an audio input device (e.g., a microphone or a port that can carry audio information such as a microphone jack, etc.), and/or any other device by which information can be received from a user or operator of the communication device 300. For example, if the communication device 300 corresponds to UE 200A or UE 200B as shown in FIG. 2, the logic configured to receive local user input 325 can include the keypad 220A, any of the buttons 215A or 210B through 225B, the touchscreen display 205B, etc. In a further example, the logic configured to receive local user input 325 can be omitted for certain communication devices, such as network communication devices that do not have a local user (e.g., network switches or routers, remote servers, etc.). The logic configured to receive local user input 325 can also include software that, when executed, permits the associated hardware of the logic configured to receive local user input 325 to perform its input reception function(s). However, the logic configured to receive local user input 325 does not correspond to software alone, and the logic configured to receive local user input 325 relies at least in part upon hardware to achieve its functionality.

Referring to FIG. 3, while the configured logics of 305 through 325 are shown as separate or distinct blocks in FIG. 3, it will be appreciated that the hardware and/or software by which the respective configured logic performs its functionality can overlap in part. For example, any software used to facilitate the functionality of the configured logics of 305 through 325 can be stored in the non-transitory memory associated with the logic configured to store information 315, such that the configured logics of 305 through 325 each performs their functionality (i.e., in this case, software execution) based in part upon the operation of software stored by the logic configured to store information 315. Likewise, hardware that is directly associated with one of the configured logics can be borrowed or used by other configured logics from time to time. For example, the processor of the logic configured to process information 310 can format data into an appropriate format before being transmitted by the logic configured to receive and/or transmit information 305, such that the logic configured to receive and/or transmit information 305 performs its functionality (i.e., in this case, transmission of data) based in part upon the operation of hardware (i.e., the processor) associated with the logic configured to process information 310.

Generally, unless stated otherwise explicitly, the phrase "logic configured to" as used throughout this disclosure is intended to invoke an embodiment that is at least partially implemented with hardware, and is not intended to map to software-only implementations that are independent of hardware. Also, it will be appreciated that the configured logic or "logic configured to" in the various blocks are not limited to specific logic gates or elements, but generally refer to the ability to perform the functionality described herein (either via hardware or a combination of hardware and software). Thus, the configured logics or "logic configured to" as illustrated in the various blocks are not necessarily implemented as logic gates or logic elements despite sharing the word "logic." Other interactions or cooperation between the logic in the various blocks will become clear to one of ordinary skill in the art from a review of the embodiments described below in more detail.

Mobile devices, such as cell phones, personal digital assistants (PDAs), tablet computers, etc., frequently contain inertial sensors, such as accelerometers and gyroscopes. The mobile device can determine its acceleration and/or rotation, for example, by sampling the data output by the accelerometer and/or gyroscope, respectively, at a given sampling rate. Inertial sensors are typically implemented as low-cost microelectromechanical systems (MEMS) inertial sensors.

These MEMS inertial sensors may have lower bandwidth (i.e. the difference between the upper and lower frequencies) than the Nyquist frequency (i.e., half the sampling rate/frequency) that corresponds to the sampling rate. Further, the bandwidth of the accelerometer may differ from the bandwidth of the gyroscope even if they are used in the same mobile device. More generally, different frequency filters may be applied to accelerometers than to gyroscopes. This has at least two effects: (1) the frequency content and (2) the signal group delay are different in the accelerometer and the gyroscope. When these sensors are used together, as in inertial navigation, for example, this frequency and time delay mismatch can negatively affect performance. Such a mismatch causes a measurable performance degradation in inertial systems.

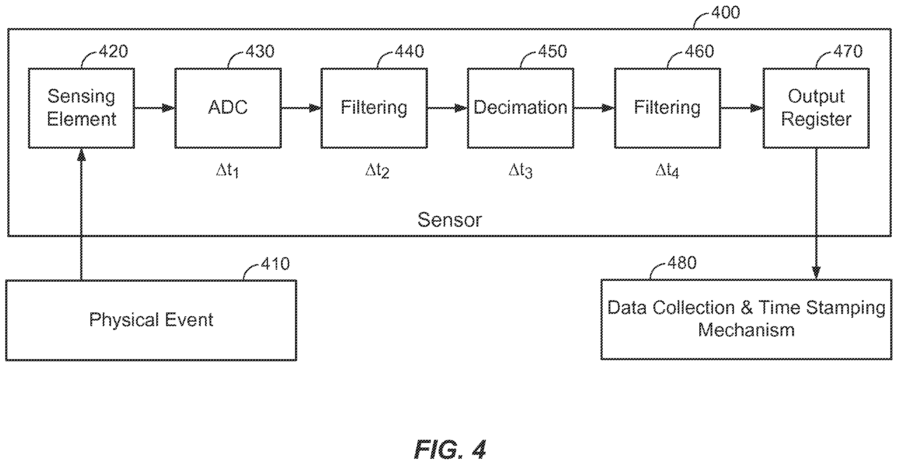

FIG. 4 illustrates various sources of time delay inside an exemplary sensor 400. Sensor 400 may be any sensor that senses physical events and/or environmental conditions, including but not limited to an inertial sensor, such as an accelerometer or a gyroscope. At 410, a physical event occurs. The physical event could be movement of a mobile device in which the sensor 400 is housed. The movement may be an acceleration, a vibration, a rotation, or the like.

A sensing element 420 senses the physical event 410 and transmits the data in analog form to an analog-to-digital converter (ADC) 430. The ADC 430 converts the analog signal received from the sensing element 420 to a digital signal and outputs this digital signal to a filtering element 440. This conversion introduces a first time delay Δt₁. The filtering element 440 samples the digital signal at a given sampling rate and sends the filtered data to a decimation element 450. This filtering introduces a second time delay At₂. The decimation element 450 processes the filtered data received from the filtering element 440 to reduce the sampling rate. This introduces a third time delay Δt₃. The decimation element 450 sends the decimated data to filtering element 460. Filtering element 460 filters the decimated data and sends it to output register 470. This filtering introduces a fourth time delay Δt₄. The data collection and time stamping mechanism 480 reads the processed data from the output register 470 and assigns a timestamp to it.

As can be seen in the example sensor 400 of FIG. 4, there is a time delay between the time the physical event occurs and the time at which the data output from the sensor is time stamped. This delay occurs even if the time stamping mechanism is perfect, i.e. introduces no further delay. The time delay can be determined from the design of the sensor. For example, the manufacturer of the sensor may provide this information. The time delay can also be determined by testing the sensor, such as by comparing the time a sensed event is output to the known time that the event occurred.

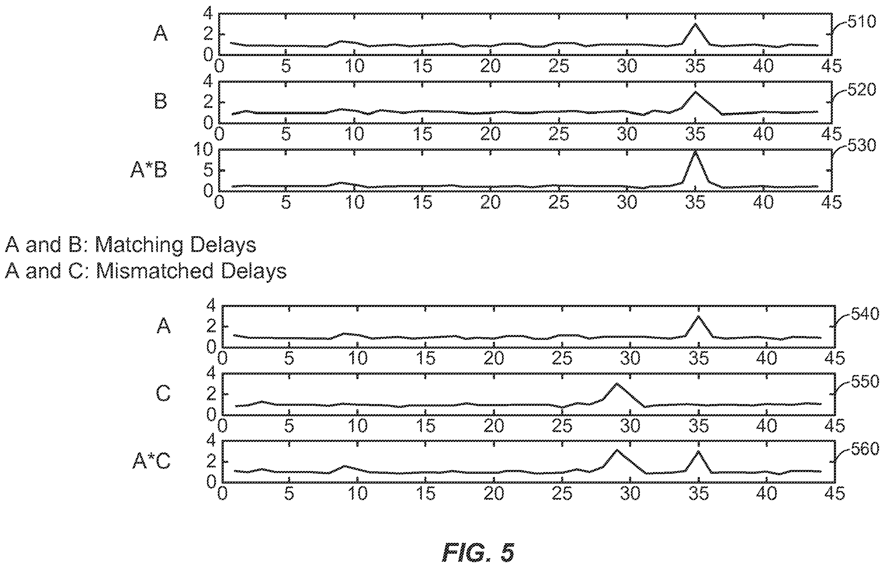

FIG. 5 is an exemplary illustration of the error caused by a time offset when two signals are multiplied. The output of a sensor A is shown in graph 510 and the output of a sensor B is shown in graph 520. The multiplied signal is shown in graph 530. The output of both sensors A and B are synchronized with respect to time, as shown by the simultaneous spike at time 35.

The output of sensor A is again shown in graph 540. Graph 550 shows the output of sensor B but with a smaller time delay, designated "C." In this case, multiplying A and C does not equal the simultaneous spike in graph 560 as it did in graph 530. Rather, the sensed events appear to be separate events. This degrades the accuracy of the application using the sensor data.

By measuring the difference in time delay between the output A and the output C, the relative time delay difference between the two sensors can be determined. In the example of FIG. 5, the relative time delay is approximately five. The relative time delay can then be used to synchronize the timestamps of the two sensors. For example, the relative time delay can be added to the timestamp of the faster sensor or subtracted from the timestamp of the slower sensor so that the timestamps of the two sensors match. The relative time delay can be determined by testing the sensors, such as by comparing the timestamps output by the sensors after they sense the same event.

The synchronization of the sensors is more important than the accuracy of the sensors. Accordingly, the sensors can be synchronized using the relative time delay between the sensors instead of the absolute time delay of each sensor.

In addition to the time delay issue caused by using data from different sensors, there is also a bandwidth issue. Different sensors may use different filtering, which can cause the sensors to have different bandwidths. The different bandwidth and/or an undesirable cutoff frequency can cause errors in the application using the sensor data. If the bandwidth of two sensors is significantly different, they will reflect the same event in a non-matching way. For example, if the bandwidths of an accelerometer and a gyroscope are significantly different, it can cause navigation errors in a navigation application using the sensor data.

Accordingly, when important for performance, the various embodiments presented herein can match the bandwidths and/or the signal time delay of two or more sensors being used by an application. In the frequency matching aspect, the bandwidths of the sensors are determined and additional filtering is applied to match the frequency characteristics of the sensor data. In the time delay matching aspect, the time delays are measured or otherwise determined, and an additional time delay is introduced on the appropriate sensor to bring the delays to the same value. The frequency matching and the time delay matching can be applied separately or in combination.

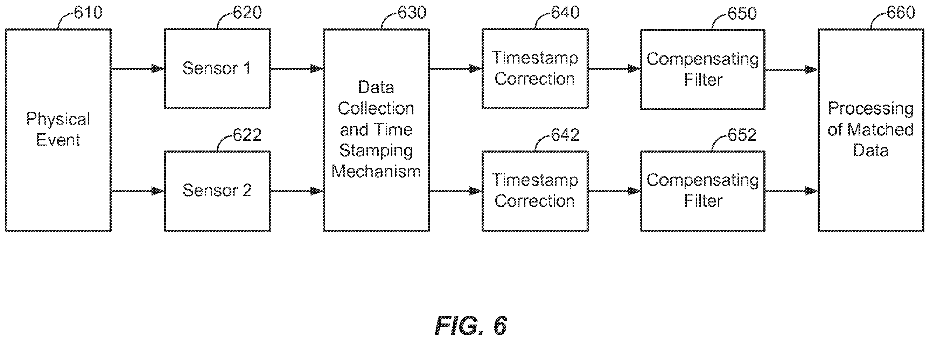

FIG. 6 illustrates an exemplary embodiment to compensate for different bandwidths and time delays between two sensors 620 and 622. Although FIG. 6 illustrates two sensors, there could be any number of different co-located sensors. That the sensors are co-located means that the sensors are on the same device. The sensors need not be adjacent, they merely need to sense the same physical event. The sensors can be the same type of sensor or different types of sensors.

Sensors 620 and 622 detect physical event 610. The data collection and time stamping mechanism 630 reads the sensor data generated by sensors 620 and 622 and assigns timestamps to the data. The time stamped data is then passed to timestamp correction elements 640 and 642.

Timestamp correction element 640 determines or is provided the time delay for sensor 620. As discussed above with reference to FIG. 4, the time delay is the time difference between the value of the timestamp assigned to the sensor data by the data collection and time stamping mechanism 630 and the time at which the physical event was actually detected. The timestamp correction element 640 generates a corrected timestamp, or modifies the assigned timestamp, by adding the time delay to the value of the assigned timestamp.

Timestamp correction element 642 performs a similar process for sensor 622. If there are other sensors being used by the application, corresponding timestamp correction elements perform a similar process for each of them.

The sensor data with the corrected timestamps are then passed to compensating filters 650 and 652, which compensate for different sampling frequencies in the sensors 620 and 622, respectively. If the frequency of the bandwidth of sensor 620 is greater than the frequency of the bandwidth of sensor 622, then compensating filter 650 filters the frequency of the bandwidth of sensor 620 to match the frequency of the bandwidth of sensor 622. If, however, the frequency of the bandwidth of sensor 622 is greater than the frequency of the bandwidth of sensor 620, then the compensating filter 652 filters the frequency of the bandwidth of sensor 622 to match the frequency of the bandwidth of sensor 620. If the frequencies of the bandwidths are the same, then no compensation needs to be performed.

The sensor data need not be passed to compensating filters 650 and 652 after passing through timestamp correction elements 640 and 642, as illustrated in FIG. 6. As discussed above, in some embodiments, only time delays may be matched. Moreover, in some embodiments, for example wherein only the frequencies are matched, the sensor data can pass through compensating filters 650 and 652 after being detected by sensors 620 and 622, or after passing through the data collection and time stamping mechanism 630.

If there are other sensors being used by the application, corresponding compensating filters perform a similar process for each of them. In that case also, the lowest bandwidth frequency is determined and the higher bandwidth frequencies are filtered to match the lowest frequency.

The filtered sensor data is then passed on for additional processing 660 by the application using sensors 620 and 622. The data from sensors 620 and 622 is now matched with respect to time and bandwidth frequency.

While FIG. 6 illustrates timestamp correction elements 640 and 642 as separate components/modules, they may be embodied as a single component/module that receives data for each sensor from the data collection and time stamping mechanism 630. Likewise, while FIG. 6 illustrates compensating filters 650 and 652 as separate components/modules, they may be embodied as a single component/module that receives data for each sensor from the timestamp correction element(s).

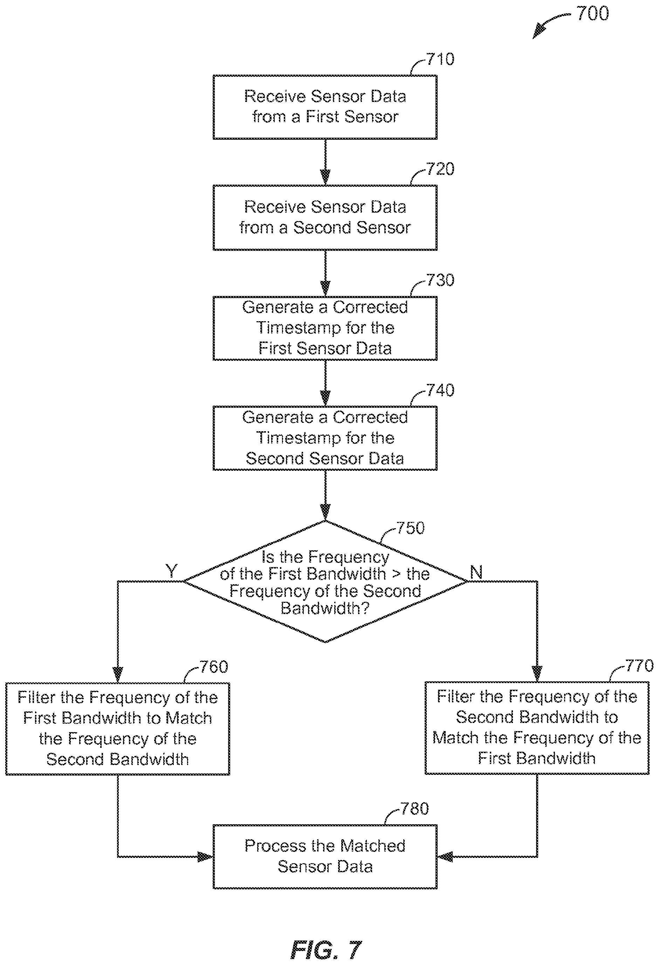

FIG. 7 illustrates an exemplary flow 700 of an embodiment. The flow 700 may be performed by an application using sensor data, by an ASIC or other processor, or by a combination of both. At 710, sensor data from a first sensor is received. The sensor may be an inertial sensor, such as an accelerometer or a gyroscope. At 720, sensor data from a second sensor is received. The second sensor may also be an inertial sensor, such as an accelerometer or a gyroscope.

At 730, a corrected timestamp for the first sensor data is generated. At 740, a corrected timestamp for the second sensor data is generated.

At 750, the application and/or processor determines whether or not the frequency of the bandwidth of the first sensor is greater than the frequency of the bandwidth of the second sensor. If it is, then at 760, the frequency of the first bandwidth is filtered to match the frequency of the second bandwidth. If, however, the frequency of the second bandwidth is greater than the frequency of the first bandwidth, then at 770, the frequency of the second bandwidth is filtered to match the frequency of the first bandwidth.

At 780, the matched sensor data is processed. For example, if the first and second sensors are an accelerometer and a gyroscope and the application is a navigational application, the application processes the matched sensor data to provide more accurate navigational guidance.

While the embodiments above have been described primarily with reference to Ix EV-DO architecture in CDMA2000 networks, GPRS architecture in W-CDMA or UMTS networks and/or EPS architecture in LTE-based networks, it will be appreciated that other embodiments can be directed to other types of network architectures and/or protocols.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method for matching a time delay and a bandwidth of a plurality of sensors (620, 622), the method **characterised by** comprising:
receiving (710) first sensor data having a first timestamp from a first sensor (620) having a first bandwidth;
receiving (720) second sensor data having a second timestamp from a second sensor (622) having a second bandwidth, wherein the first bandwidth is different to the second bandwidth; and
synchronizing the first sensor data and the second sensor data by performing one or more of:
compensating (730) for a first time delay of the first sensor data, wherein compensating comprises determining or providing the first time delay;
compensating (740) for a second time delay of the second sensor data, wherein compensating comprises determining or providing the second time delay;
compensating for a relative time delay between the first sensor data and the second sensor data, wherein compensating comprises determining or providing a first time delay of the first sensor data and a second time delay of the second sensor data; or
matching (760; 770) the first bandwidth and the second bandwidth to a common bandwidth.

2. The method of claim 1, wherein:
the common bandwidth is one of the first bandwidth, the second bandwidth, or a third bandwidth; or
the first sensor and the second sensor are co-located on a device; or
the first and second sensors are inertial sensors.

3. The method of claim 1, further comprising:
correlating the first sensor data to the second sensor data based on the matching and the compensating for the first time delay, the second time delay, or the relative time delay; and
processing the correlated sensor data.

4. The method of claim 1, wherein the matching comprises:
applying a filter to one of the first sensor data or the second sensor data ,
wherein the applying preferably comprises:
determining whether the first bandwidth is greater than the second bandwidth;
if the first bandwidth is greater than the second bandwidth, filtering the first bandwidth to match the second bandwidth; and
if the first bandwidth is not greater than the second bandwidth, filtering the second bandwidth to match the first bandwidth.

5. The method of claim 1, wherein the compensating for the first time delay comprises:
determining the first time delay; and
generating a first corrected timestamp by adding the first time delay to a value of the first timestamp, wherein determining the first time delay preferably comprises:
determining a time difference between a value of the first timestamp and a time at which the first sensor data was captured.

6. The method of claim 1, wherein the compensating for the second time delay comprises:
determining the second time delay; and
generating a second corrected timestamp by adding the second time delay to a value of the second timestamp, wherein determining the second time delay preferably comprises:
determining a time difference between a value of the second timestamp and a time at which the second sensor data was captured.

7. The method of claim 1, wherein the compensating for the relative time delay comprises:
matching the first timestamp to the second timestamp..

8. The method of claim 1, further comprising:
receiving third sensor data having a third timestamp from a third sensor having a third bandwidth;
matching the third bandwidth to the first bandwidth and the second bandwidth; and
compensating for a third time delay of the third sensor.

9. The method of claim 8, wherein the compensating for the third time delay comprises:
determining the third time delay; and
generating a third corrected timestamp by adding the third time delay to a value of the third timestamp, wherein the matching preferably comprises:
applying a filter to one or more of the first sensor data, the second sensor data, or the third sensor data.

10. The method of claim 9, wherein the applying comprises:
determining a lowest bandwidth among the first bandwidth, the second bandwidth, and the third bandwidth;
if the first bandwidth is the lowest bandwidth, filtering the second bandwidth and the third bandwidth to match the first bandwidth;
if the second bandwidth is the lowest bandwidth, filtering the first bandwidth and the third bandwidth to match the second bandwidth; and
if the third bandwidth is the lowest bandwidth, filtering the first bandwidth and the second bandwidth to match the third bandwidth.

11. An apparatus (200A; 200B) for matching a time delay and a bandwidth of a plurality of sensors (620, 622), the apparatus **characterised by** comprising:
means (640) for receiving (710) first sensor data having a first timestamp from a first sensor having a first bandwidth;
means (642) for receiving (720) second sensor data having a second timestamp from a second sensor having a second bandwidth, wherein the first bandwidth is different to the second bandwidth; and
means for synchronizing the first sensor data and the second sensor data comprising one or more of:
means (640) for compensating (730) for a first time delay of the first sensor data, wherein compensating comprises determining or providing the first time delay;
means (642) for compensating (740) for a second time delay of the second sensor data, wherein compensating comprises determining or providing the second time delay;
means for compensating for a relative time delay between the first sensor data and the second sensor data, wherein compensating comprises determining or providing a first time delay of the first sensor data and a second time delay of the second sensor data; or
means (650; 652) for matching (760; 770) the first bandwidth and the second bandwidth to a common bandwidth.

12. The apparatus of claim 11, wherein:
the common bandwidth is one of the first bandwidth, the second bandwidth, or a third bandwidth; or
the means for matching comprises means for applying a filter to one of the first sensor data or the second sensor data, wherein the means for applying comprises:
means for determining whether the first bandwidth is greater than the second bandwidth;
means for filtering the first bandwidth to match the second bandwidth if the first bandwidth is greater than the second bandwidth; and
means for filtering the second bandwidth to match the first bandwidth if the first bandwidth is not greater than the second bandwidth.

13. The apparatus of claim 11, wherein the means for compensating for the first time delay comprises:
means for determining the first time delay; and
means for generating a first corrected timestamp by adding the first time delay to a value of the first timestamp, wherein the means for compensating for the relative time delay preferably comprises:
means for matching the first timestamp to the second timestamp.

14. An apparatus (200A; 200B) for matching a time delay and a bandwidth of a plurality of sensors (620, 622), according to any one of claims 11 - 13 wherein: the means for an action is logic configured to perform the action.

15. A non-transitory computer-readable medium for matching a time delay and a bandwidth of a plurality of sensors (620, 622), comprising:
instructions for performing a method according to any one of claims 1 to 10.

## Patentansprüche

1. Ein Verfahren zum Anpassen einer Zeitverzögerung und einer Bandbreite einer Vielzahl von Sensoren (620, 622), wobei das Verfahren **gekennzeichnet ist durch**:
Empfangen (710) von ersten Sensordaten mit einem ersten Zeitstempel von einem ersten Sensor (620), der eine erste Bandbreite aufweist,
Empfangen (720) von zweiten Sensordaten mit einem zweiten Zeitstempel von einem zweiten Sensor (622), der eine zweite Bandbreite aufweist, wobei die erste Bandbreite verschieden ist von der zweiten Bandbreite, und
Synchronisieren der ersten Sensordaten und der zweiten Sensordaten durch das Durchführen von einem oder mehreren der Folgenden:
Kompensieren (730) für eine erste Zeitverzögerung der ersten Sensordaten, wobei das Kompensieren das Bestimmen oder Vorsehen der ersten Zeitverzögerung aufweist,
Kompensieren (740) für eine zweite Zeitverzögerung der zweiten Sensordaten, wobei das Kompensieren das Bestimmen oder Vorsehen der zweiten Zeitverzögerung aufweist,
Kompensieren für eine relative Zeitverzögerung zwischen den ersten Sensordaten und den zweiten Sensordaten, wobei das Kompensieren das Bestimmen oder Vorsehen einer ersten Zeitverzögerung der ersten Sensordaten und einer zweiten Zeitverzögerung der zweiten Sensordaten aufweist, oder
Anpassen (760; 770) der ersten Bandbreite und der zweiten Bandbreite an eine gemeinsame Bandbreite.

2. Verfahren nach Anspruch 1, wobei:
die gemeinsame Bandbreite die erste Bandbreite, die zweite Bandbreite oder eine dritte Bandbreite ist, oder
der erste Sensor und der zweite Sensor gemeinsam an einem Gerät angeordnet sind, oder
die ersten und zweiten Sensoren Inertialsensoren sind.

3. Verfahren nach Anspruch 1, das weiterhin aufweist:
Korrelieren der ersten Sensordaten mit den zweiten Sensordaten basierend auf der Anpassung und der Kompensation für die erste Zeitverzögerung, die zweite Zeitverzögerung oder die relative Zeitverzögerung, und
Verarbeiten der korrelierten Sensordaten.

4. Verfahren nach Anspruch 1, wobei das Anpassen aufweist:
Anwenden eines Filters auf die ersten Sensordaten oder die zweiten Sensordaten, wobei das Anwenden vorzugsweise aufweist:
Bestimmen, ob die erste Bandbreite größer ist als die zweite Bandbreite,
wenn die erste Bandbreite größer ist als die zweite Bandbreite, Filtern der ersten Bandbreite, um diese an die zweite Bandbreite anzupassen, und
wenn die erste Bandbreite nicht größer als die zweite Bandbreite ist, Filtern der zweiten Bandbreite, um diese an die erste Bandbreite anzupassen.

5. Verfahren nach Anspruch 1, wobei das Kompensieren für die erste Zeitverzögerung aufweist:
Bestimmen der ersten Zeitverzögerung, und
Generieren eines ersten korrigierten Zeitstempels durch das Addieren der ersten Zeitverzögerung zu einem Wert des ersten Zeitstempels, wobei das Bestimmen der ersten Zeitverzögerung vorzugsweise aufweist:
Bestimmen einer Zeitdifferenz zwischen einem Wert des ersten Zeitstempels und der Zeit, zu der die ersten Sensordaten erfasst wurden.

6. Verfahren nach Anspruch 1, wobei das Kompensieren für die zweite Zeitverzögerung aufweist:
Bestimmen der zweiten Zeitverzögerung, und
Generieren eines zweiten korrigierten Zeitstempels durch das Addieren der zweiten Zeitverzögerung zu einem Wert des zweiten Zeitstempels, wobei das Bestimmen der zweiten Zeitverzögerung vorzugsweise aufweist:
Bestimmen einer Zeitdifferenz zwischen einem Wert des zweiten Zeitstempels und einer Zeit, zu der die zweiten Sensordaten erfasst wurden.

7. Verfahren nach Anspruch 1, wobei das Kompensieren für die relative Zeitverzögerung aufweist:
Anpassen des ersten Zeitstempels an den zweiten Zeitstempel.

8. Verfahren nach Anspruch 1, das weiterhin aufweist:
Empfangen von dritten Sensordaten, die einen dritten Zeitstempel aufweisen, von einem dritten Sensor, der eine dritte Bandbreite aufweist,
Anpassen der dritten Bandbreite an die erste Bandbreite und die zweite Bandbreite, und
Kompensieren für eine dritte Zeitverzögerung des dritten Sensors.

9. Verfahren nach Anspruch 8, wobei das Kompensieren für die dritte Zeitverzögerung aufweist:
Bestimmen der dritten Zeitverzögerung, und
Generieren eines dritten korrigierten Zeitstempels durch das Addieren der dritten Zeitverzögerung zu einem Wert des dritten Zeitstempels, wobei das Anpassen vorzugsweise aufweist:
Anwenden eines Filters auf die ersten Sensordaten, die zweiten Sensordaten und/oder die dritten Sensordaten.

10. Verfahren nach Anspruch 9, wobei das Anwenden aufweist:
Bestimmen einer kleinsten Bandbreite innerhalb der ersten Bandbreite, der zweiten Bandbreite und der dritten Bandbreite,
wenn die erste Bandbreite die kleinste Bandbreite ist, Filtern der zweiten Bandbreite und der dritten Bandbreite, um diese an die erste Bandbreite anzupassen,
wenn die zweite Bandbreite die kleinste Bandbreite ist, Filtern der ersten Bandbreite und der dritten Bandbreite, um diese an die zweite Bandbreite anzupassen, und
wenn die dritte Bandbreite die kleinste Bandbreite ist, Filtern der ersten Bandbreite und der zweiten Bandbreite, um diese an die dritte Bandbreite anzupassen.

11. Eine Vorrichtung (200A, 200B) zum Anpassen einer Zeitverzögerung und einer Bandbreite einer Vielzahl von Sensoren (620, 622), wobei die Vorrichtung **gekennzeichnet ist durch**:
Mittel (640) zum Empfangen (710) von ersten Sensordaten mit einem ersten Zeitstempel von einem ersten Sensor, der eine erste Bandbreite aufweist,
Mittel (642) zum Empfangen (720) von zweiten Sensordaten mit einem zweiten Zeitstempel von einem zweiten Sensor, der eine zweite Bandbreite aufweist, wobei die erste Bandbreite verschieden ist von der zweiten Bandbreite, und
Mittel zum Synchronisieren der ersten Sensordaten und der zweiten Sensordaten, die eines oder mehreren der Folgenden aufweisen:
Mittel (640) zum Kompensieren (730) für eine erste Zeitverzögerung der ersten Sensordaten, wobei das Kompensieren das Bestimmen oder Vorsehen der ersten Zeitverzögerung aufweist,
Mittel (642) zum Kompensieren (740) für eine zweite Zeitverzögerung der zweiten Sensordaten, wobei das Kompensieren das Bestimmen oder Vorsehen der zweiten Zeitverzögerung aufweist,
Mittel zum Kompensieren für eine relative Zeitverzögerung zwischen den ersten Sensordaten und den zweiten Sensordaten, wobei das Kompensieren das Bestimmen oder Vorsehen einer ersten Zeitverzögerung der ersten Sensordaten und einer zweiten Zeitverzögerung der zweiten Sensordaten aufweist, oder
Mittel (650; 652) zum Anpassen (760; 770) der ersten Bandbreite und der zweiten Bandbreite an eine gemeinsame Bandbreite.

12. Vorrichtung nach Anspruch 11, wobei:
die gemeinsame Bandbreite die erste Bandbreite, die zweite Bandbreite oder eine dritte Bandbreite ist, oder
die Mittel zum Anpassen Mittel zum Anwenden eines Filters auf die ersten Sensordaten oder die zweiten Sensordaten aufweisen, wobei die Mittel zum Anwenden aufweisen:
Mittel zum Bestimmen, ob die erste Bandbreite größer ist als die zweite Bandbreite,
Mittel zum Filtern der ersten Bandbreite, um diese an die zweite Bandbreite anzupassen, wenn die erste Bandbreite größer ist als die zweite Bandbreite, und
Mittel zum Filtern der zweiten Bandbreite, um diese an die erste Bandbreite anzupassen, wenn die erste Bandbreite nicht größer ist als die zweite Bandbreite.

13. Vorrichtung nach Anspruch 11, wobei die Mittel zum Kompensieren für die erste Zeitverzögerung aufweisen:
Mittel zum Bestimmen der ersten Zeitverzögerung, und
Mittel zum Generieren eines ersten korrigierten Zeitstempels durch das Addieren der ersten Zeitverzögerung zu einem Wert des ersten Zeitstempels, wobei die Mittel zum Kompensieren für die relative Zeitverzögerung vorzugsweise aufweisen:
Mittel zum Anpassen des ersten Zeitstempels an den zweiten Zeitstempel.

14. Eine Vorrichtung (200A, 200B) zum Anpassen einer Zeitverzögerung und einer Bandbreite einer Vielzahl von Sensoren (620, 622) gemäß einem der Ansprüche 11-13, wobei die Mittel für eine Aktion eine für das Durchführen der Aktion konfigurierte Logik sind.

15. Ein nicht-transitorisches, computerlesbares Medium zum Anpassen einer Zeitverzögerung und einer Bandbreite einer Vielzahl von Sensoren (620, 622), aufweisend:
Befehle zum Durchführen eines Verfahrens gemäß einem der Ansprüche 1 bis 10.

## Revendications

1. Procédé de mise en correspondance d'un retard temporel et d'une bande passante d'une pluralité de capteurs (620, 622), le procédé étant **caractérisé en ce qu'**il comporte les étapes ci-dessous consistant à :
recevoir (710) des premières données de capteur présentant une première estampille temporelle en provenance d'un premier capteur (620) présentant une première bande passante ;
recevoir (720) des deuxièmes données de capteur présentant une deuxième estampille temporelle en provenance d'un deuxième capteur (622) présentant une deuxième bande passante, dans lequel la première bande passante est différente de la deuxième bande passante ; et
synchroniser les premières données de capteur et les deuxièmes données de capteur en mettant en oeuvre une ou plusieurs des étapes ci-dessous consistant à :
compenser (730) un premier retard temporel des premières données de capteur, dans lequel l'étape de compensation comprend l'étape consistant à déterminer ou à fournir le premier retard temporel ;
compenser (740) un deuxième retard temporel des deuxièmes données de capteur, dans lequel l'étape de compensation comprend l'étape consistant à déterminer ou à fournir le deuxième retard temporel ;
compenser un retard temporel relatif entre les premières données de capteur et les deuxièmes données de capteur, dans lequel l'étape de compensation comprend l'étape consistant à déterminer ou à fournir un premier retard temporel des premières données de capteur et un deuxième retard temporel des deuxièmes données de capteur ; ou
mettre en correspondance (760 ; 770) la première bande passante et la deuxième bande passante avec une bande passante commune.

2. Procédé selon la revendication 1, dans lequel :
la bande passante commune correspond à l'une parmi la première bande passante, la deuxième bande passante ou une troisième bande passante ; ou
le premier capteur et le deuxième capteur sont co-localisés sur un dispositif ; ou
le premier capteur et le deuxième capteur sont des capteurs inertiels.

3. Procédé selon la revendication 1, comportant en outre les étapes ci-dessous consistant à :
corréler les premières données de capteur avec les deuxièmes données de capteur sur la base de l'étape de mise en correspondance et de l'étape de compensation du premier retard temporel, du deuxième retard temporel ou du retard temporel relatif ; et
traiter les données de capteur corrélées.

4. Procédé selon la revendication 1, dans lequel l'étape de mise en correspondance comporte l'étape ci-dessous consistant à :
appliquer un filtre à l'une parmi les premières données de capteur ou les deuxièmes données de capteur, dans lequel l'étape d'application comporte de préférence les étapes ci-dessous consistant à :
déterminer si la première bande passante est supérieure à la deuxième bande passante ;
si la première bande passante est supérieure à la deuxième bande passante, filtrer la première bande passante afin qu'elle corresponde à la deuxième bande passante ; et
si la première bande passante n'est pas supérieure à la deuxième bande passante, filtrer la deuxième bande passante afin qu'elle corresponde à la première bande passante.

5. Procédé selon la revendication 1, dans lequel l'étape de compensation du premier retard temporel comporte les étapes ci-dessous consistant à :
déterminer le premier retard temporel ; et
générer une première estampille temporelle corrigée, en ajoutant le premier retard temporel à une valeur de la première estampille temporelle, dans lequel l'étape de détermination du premier retard temporel comporte de préférence l'étape ci-dessous consistant à :
déterminer une différence de temps entre la valeur de la première estampille temporelle et une heure à laquelle les premières données de capteur ont été capturées.

6. Procédé selon la revendication 1, dans lequel l'étape de compensation du deuxième retard temporel comporte les étapes ci-dessous consistant à :
déterminer le deuxième retard temporel ; et
générer une deuxième estampille temporelle corrigée, en ajoutant le deuxième retard temporel à une valeur de la deuxième estampille temporelle, dans lequel l'étape de détermination du deuxième retard temporel comporte de préférence l'étape ci-dessous consistant à :
déterminer une différence de temps entre la valeur de la deuxième estampille temporelle et une heure à laquelle les deuxièmes données de capteur ont été capturées.

7. Procédé selon la revendication 1, dans lequel l'étape de compensation du retard temporel relatif comporte l'étape ci-dessous consistant à :
mettre en correspondance la première estampille temporelle avec la deuxième estampille temporelle.

8. Procédé selon la revendication 1, comportant en outre les étapes ci-dessous consistant à :
recevoir des troisièmes données de capteur présentant une troisième estampille temporelle en provenance d'un troisième capteur présentant une troisième bande passante ;
mettre en correspondance la troisième bande passante avec la première bande passante et la deuxième bande passante ; et
compenser un troisième retard temporel du troisième capteur.

9. Procédé selon la revendication 8, dans lequel l'étape de compensation du troisième retard temporel comporte les étapes ci-dessous consistant à :
déterminer le troisième retard temporel ; et
générer une troisième estampille temporelle corrigée, en ajoutant le troisième retard temporel à une valeur de la troisième estampille temporelle, dans lequel l'étape de mise en correspondance comporte de préférence l'étape ci-dessous consistant à :
appliquer un filtre à une ou plusieurs parmi les premières données de capteur, les deuxièmes données de capteur ou les troisièmes données de capteur.

10. Procédé selon la revendication 9, dans lequel l'étape d'application comporte les étapes ci-dessous consistant à :
déterminer une bande passante la plus faible parmi la première bande passante, la deuxième bande passante et la troisième bande passante ;
si la première bande passante est la bande passante la plus faible, filtrer la deuxième bande passante et la troisième bande passante afin qu'elles correspondent à la première bande passante ;
si la deuxième bande passante est la bande passante la plus faible, filtrer la première bande passante et la troisième bande passante afin qu'elles correspondent à la deuxième bande passante ; et
si la troisième bande passante est la bande passante la plus faible, filtrer la première bande passante et la deuxième bande passante afin qu'elles correspondent à la troisième bande passante.

11. Appareil (200A ; 200B) destiné à mettre en correspondance un retard temporel et une bande passante d'une pluralité de capteurs (620, 622), l'appareil étant **caractérisé en ce qu'**il comporte :
un moyen (640) pour recevoir (710) des premières données de capteur présentant une première estampille temporelle en provenance d'un premier capteur présentant une première bande passante ;
un moyen (642) pour recevoir (720) des deuxièmes données de capteur présentant une deuxième estampille temporelle en provenance d'un deuxième capteur présentant une deuxième bande passante, dans lequel la première bande passante est différente de la deuxième bande passante ; et
un moyen pour synchroniser les premières données de capteur et les deuxièmes données de capteur, comportant un ou plusieurs moyens parmi :
un moyen (640) pour compenser (730) un premier retard temporel des premières données de capteur, dans lequel la compensation comprend l'étape consistant à déterminer ou à fournir le premier retard temporel ;
un moyen (642) pour compenser (740) un deuxième retard temporel des deuxièmes données de capteur, dans lequel la compensation comprend l'étape consistant à déterminer ou à fournir le deuxième retard temporel ;
un moyen pour compenser un retard temporel relatif entre les premières données de capteur et les deuxièmes données de capteur, dans lequel la compensation comprend l'étape consistant à déterminer ou à fournir un premier retard temporel des premières données de capteur et un deuxième retard temporel des deuxièmes données de capteur ; ou
un moyen (650 ; 652) pour mettre en correspondance (760 ; 770) la première bande passante et la deuxième bande passante avec une bande passante commune.

12. Appareil selon la revendication 11, dans lequel :
la bande passante commune correspond à l'une parmi la première bande passante, la deuxième bande passante ou une troisième bande passante ; ou
le moyen de mise en correspondance comporte un moyen pour appliquer un filtre à l'une parmi les premières données de capteur ou les deuxièmes données de capteur, dans lequel le moyen d'application comporte :
un moyen pour déterminer si la première bande passante est supérieure à la deuxième bande passante ;
un moyen pour filtrer la première bande passante afin qu'elle corresponde à la deuxième bande passante, si la première bande passante est supérieure à la deuxième bande passante ; et
un moyen pour filtrer la deuxième bande passante afin qu'elle corresponde à la première bande passante, si la première bande passante n'est pas supérieure à la deuxième bande passante.

13. Appareil selon la revendication 11, dans lequel le moyen pour compenser le premier retard temporel comporte :
un moyen pour déterminer le premier retard temporel ; et
un moyen pour générer une première estampille temporelle corrigée, en ajoutant le premier retard temporel à une valeur de la première estampille temporelle, dans lequel le moyen pour compenser le retard temporel relatif comporte de préférence :
un moyen pour mettre en correspondance la première estampille temporelle avec la deuxième estampille temporelle.

14. Appareil (200A ; 200B) destiné à mettre en correspondance un retard temporel et une bande passante d'une pluralité de capteurs (620, 622), selon l'une quelconque des revendications 11 à 13, dans lequel : le moyen pour une action est une logique configurée de manière à mettre en oeuvre l'action.

15. Support non transitoire lisible par ordinateur pour mettre en correspondance un retard temporel et une bande passante d'une pluralité de capteurs (620, 622), comportant :
des instructions pour mettre en oeuvre un procédé selon l'une quelconque des revendications 1 à 10.
